# EUROPÄISCHE PATENTANMELDUNG

(11) **EP 0 816 893 A2**
(43) Veröffentlichungstag der Anmeldung: **07.01.1998**
(21) Anmeldenummer: 97109732.4
(22) Anmeldetag: 14.06.1997
(51) Int. Cl.: G02B 21/22

(54) **Verfahren zur Erzeugung des stereoskopischen Bildes eines Objektes sowie Anordnung zur stereoskopischen Betrachtung**

(30) Priorität: 24.06.1996 DE 19625200; 30.05.1997 DE 19722726
(71) Anmelder: CARL ZEISS JENA GmbH, 07745 Jena (DE)
(72) Erfinder: Geier, Karl-Heinz, Dr. rer. nat., 07745 Jena (DE); Tandler, Hans, Dr.-Ing., 07745 Jena (DE); Nordt, Gudrun, Dipl.-Phys., 07751 Cospeda (DE)
(74) Vertreter: Hampe, Holger

(57) **Zusammenfassung**

Verfahren und Anordnung zur Erzeugung eines stereoskopischen Bildes eines Objekts , wobei im vom Objekt kommenden Abbildungsstrahlengang , in oder in der Nähe der Austrittspupille einer Abbildungsoptik oder zu dieser optisch konjugiert, eine Pupillenteilung zur taktweisen Zuordnung zu einem rechten und einem linken Betrachterauge erfolgt.

## Beschreibung

In EP 730181 A1 der Anmelderin wird ein Verfahren und eine Anordnung zur Erzeugung eines stereoskopischen Bildes in einer mikroskopischen Anordnung beschrieben.

Aufgabe der vorliegenden Erfindung ist es, hierzu weitere vorteilhafte Ausführungen zu finden und die gesamte mikroskopische Anordnung bezüglich der Auflösung und Tiefenschärfe sowie des Stereoeindruckes optimal zu gestalten.
Diese Aufgabe wird gemäß der unabhängigen Ansprüche gelöst, wobei besonders vorteilhafte Weiterbildungen Gegenstand der abhängigen Ansprüche sowie der folgenden Beschreibung sind.

Das stereoskopische Bild eines selbstleuchtenden Objektes, z.B. eines mikrokopischen Fluoreszensobjektes , wird insbesondere vorteilhaft dadurch erzeugt, daß die Austrittspupille des Objektives geteilt und taktweise dem linken und rechten Auge oberhalb der Flimmerfrequenz abwechselnd zugeführt wird. Vorteilhaft ist die Teilung der Austrittspupille in zwei Kreiszweiecke, deren Schwerpunkt so einstellbar sind, daß die Beobachtung des Objektes unter einem variablen Stereowinkel erfolgt und zugleich die Beobachtungsapertur maximal ausgeschöpft bleibt, so daß eine hohe mikroskopische Auflösung erzielt wird. Nach diesem Verfahren können Durch- und Auflichtobjekte betrachtet werden. Die Pupillenteilung erfolgt in einer Ausführung über DMD-Spiegel in der Nähe der Austrittspupille
DMD = 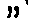 digital micromirror devices" bestehen aus einer Vielzahl von Mikrospiegeln, deren Winkellage elektrostatisch verändert wird.

In einer zweiten Ausführung erfolgt die Pupillenteilung in oder in der Nähe der Austrittspupille über einen Lichtmodulator wie z.B. eine Flüssigkristallmatrix,
wobei
die Bildbeobachtung über getaktete Bildaufnahme- und Bildwiedergabevorrichtungen(z.B. Videokamera-Monitor) oder über getaktete Lichtmodulatoren im Okularstrahlengang erfolgen kann.
Die Okularstrahlengänge können auch über einen Polstrahlenteiler mit einer schaltbaren LCD-Zelle getaktet werden.

In einer dritten möglichen Ausführung kann die Pupillenteilung in der Nähe der Austrittspupille über eine hochauflösende Videokamera erfolgen..
Die Bildbeobachtung erfolgt nach Fouriertransformation der beiden Pupillenbilder und taktweiser Wiedergabe für jedes Auge über einen Monitorshutter oder eine Shutterbrille.

Vorteilhaft sind weiterhin in oder in der Nähe der Eintrittspupille des Mikroskopobjektives sowie in oder in der Nähe seiner Austrittspupille vorzugsweise verstellbare und / oder auswechselbare Blenden angeordnet.

Die Erfindung soll nachstehend anhand der schematischen Zeichnungen weiter erläutert werden.

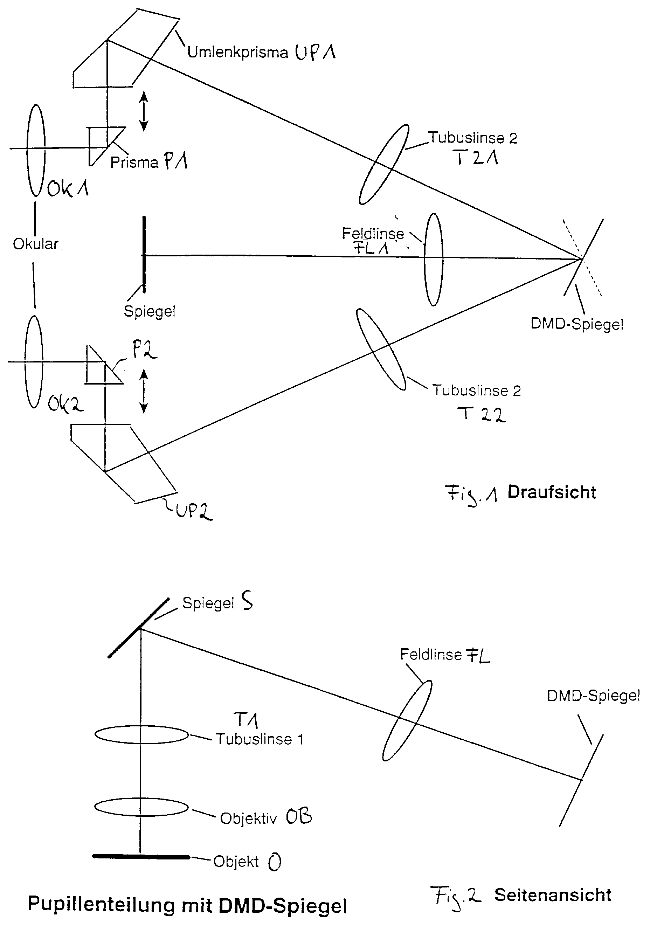

In Fig. 1 und 2 wird das Licht eines Selbststrahlers O vom Objektiv OB aufgenommen. Eine Tubuslinse T1 erzeugt ein erstes Zwischenbild jenseits eines Spiegels S. Eine Feldlinse FL erzeugt eine Abbildung der Austrittspupille des Objektives OB auf einen DMD-Spiegel. Der DMD-Spiegel teilt taktweise die Strahlbündel für ein linkes und rechtes Okular OK1, OK2 so, daß der Schwerpunkt des Strahlbündels eine Stereobeobachtung ermöglicht und die Apertur maximal ausgeschöpft wird. Die Tubuslinsen T21, T22 erzeugen das Zwischenbild für das jeweilige Okular. Umlenkprismen UP1, UP 2 und Prismen P1, P2 führen das Zwischenbild der Okularbeobachtung zu. Durch Verschieben der Prismen P1, P2 ist der Augenabstand des Betrachters einstellbar.

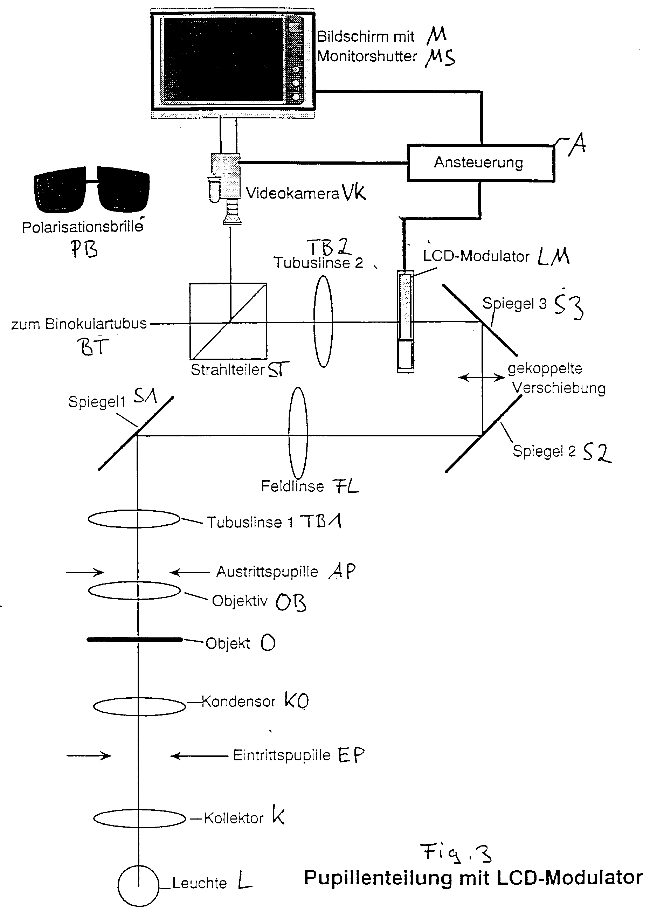

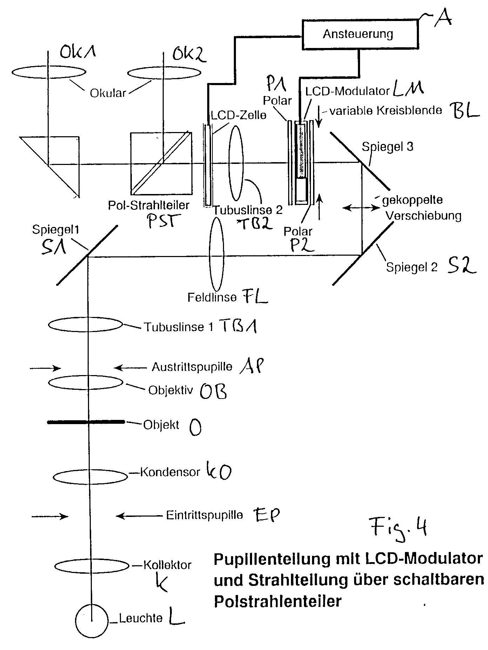

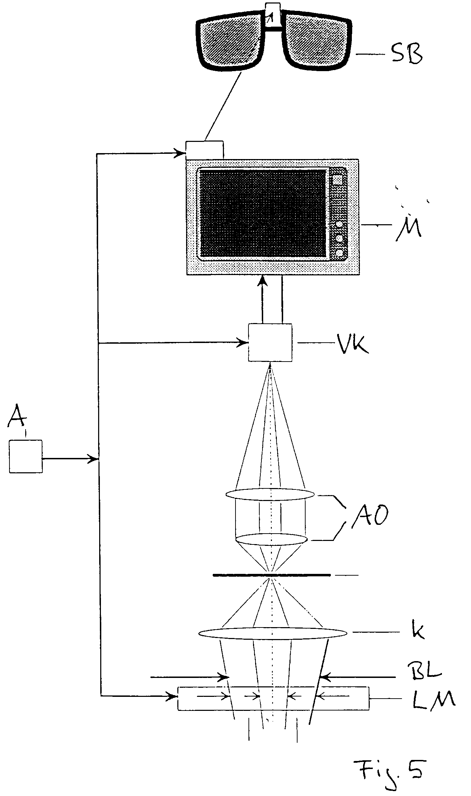

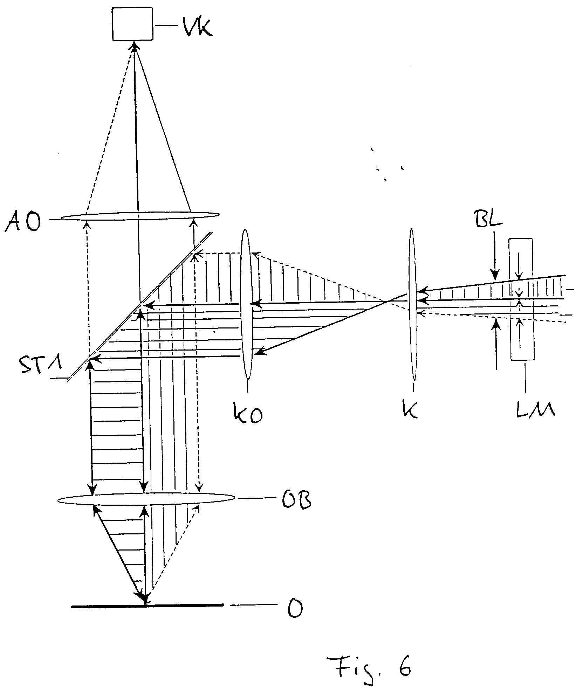

In Fig.3 beleuchtet eine Leuchte L über einen Kollektor K und Kondensor KO das Objekt O . Das Objekt O moduliert das Licht oder wird zum Selbstleuchten(z.B. Fluoreszenz) angeregt. Kondensor KO und Objektiv OB bilden die Eintrittspupille EP in die Austrittspupille AP ab. Die Feldlinse FL erzeugt über Spiegel S1, S2, S3 eine Abbildung der Austrittspupille AP in die Ebene eines Lichtmodulators LM, der z.B. als ein LCD-Modulator ausgebildet ist. Vorteilhaft können die Spiegel S2 und S3 3 gekoppelt verschoben werden, um die Austrittspupillen verschiedener Objektive OB in die Modulatorebene LM exakt abzubilden. Die Tubuslinsen TB1, TB2 sorgen für die Abbildung der Zwischenbilder des Objekts O in eine ie Videokamera VK bzw. über Strahlteiler ST in den Binokulartubus BT für die Okularbeobachtung.
Der Lichtmodulator LM teilt taktweise die Strahlbündel so, daß der Schwerpunkt des Strahlbündels eine Stereobeobachtung ermöglicht und die Apertur maximal ausgeschöpft wird.
Es sind hierbei Teilungen der Austrittspupille möglich, die über bloße Halbbilder hinausgehen, beispielsweise einander überlappende Kreiszweiecke.
Eine Videokamera VK übernimmt taktweise das jeweilige Bild. Eine Ansteuerung steuert den Lichtmodulator LM und die Videokamera VK so, daß jeweils eines der beiden Bilder eines stereoskopischen Bildpaares aufgenommen wird. Die Darstellung der dreidimensionalen Abbildung erfolgt vorzugsweise über einen elektronischen Bildschirm. Der Beobachter trägt eine Polarsationsbrille PB und betrachtet einen Monitor M über einen Monitorshutter MS , der ein schaltbares Polarisationsfilter darstellt, das mit dem Wechsel der stereoskopischen Halbbilder von der Ansteuerung getriggert wird. Direkte stereoskopische Beobachtung über Okulare OK1, OK2 ist auch durch Kombination eines Polstrahlenteiler PST mit einem LCD - Modulator möglich, wie in Fig.4 dargestellt.
Setzt man als LCD-Modulator LM ferroelektrische Flüssigkristall-Elemente zwischen zwei Polaren P1, P2 ein, so kann der in Lichtstrahlrichtung zweite Polar P2 als Polarisator für eine LCD-Zelle wirken, die mit der Ansteuerung A verbunden ist. Diese LCD-Zelle dreht die Polarisationsrichtung des auffallenden Lichtstrahles um 90° bzw. verändert die Polarisationsrichtung nicht und zwar je nach anliegender elektrischer Spannung. Der folgende Polstrahlenteiler PST besitzt eine Pol-Teilerschicht, d.h. die Schicht reflektiert eine bestimmte Polarisationsrichtung, die senkrecht dazu schwingende Polarisationsrichtung wird durchgelassen. Die Ansteuerung des LCD-Modulators LM wird mit der Ansteuerung der LCD-Zelle so gekoppelt , daß jedes Auge im Zusammenwirken mit dem Polstrahlenteiler das ihm zugeordnete Bild empfängt. Bei richtiger Zuordnung entsteht ein höhenrichtiges Stereobild Bei allen Anordnungen ist es vorteilhaft, eine variable Irisblende BL in oder in der Nähe der Austrittspupille AP oder zu dieser optisch konjugiert anzuordnen, durch deren Durchmesservariation der Kontrast, die Auflösung, die Tiefenschärfe und der 3D-Eindruck variiert werden können.
Dies ist in Fig. 4 dargestellt.
Gemäß EP 730181 der Anmelderin ist in Fig. 5 eine Durchlichtanordnung mit Betrachtung über einen Monitor M und eine Shutterbrille SB und in Fig. 6 eine Auflichtanordnung mit Beleuchtung über einen Strahlteiler ST 1 dargestellt, jeweils mit einem Lichtmodulator LM in der Aperturblendenebene des Beleuchtungsstrahlenganges , in dessen Nähe eine verstellbare Blende BL angeordnet ist.
Das Bild des Objektes wird über eine Abbildungsoptik AO in eine Videokamera VK abgebildet. Eine Abbildung des Objektes über ganzflächig schaltbare Okulare ermöglicht ebenfalls eine stereoskopische Beobachtung.
Die Blende BL ist vorzugsweise kreisförmig und in der Nähe der Eintrittspupille des Objektives angeordnet.
Durch Variation des Innendurchmessers der Kreisblende BL , z.B. mittels einer Irisblende kann die Tiefenschärfe und die Auflösung des stereoskopischen Bildes dem Objekt angepaßt werden, so daß ein brilliantes stereoskopisches Bild zu beobachten ist.

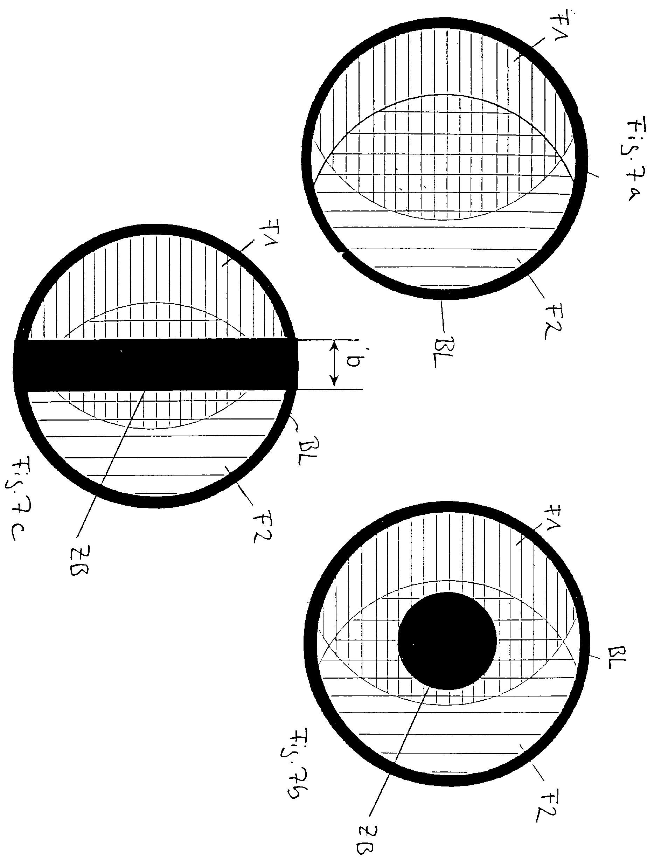

Fig. 7a zeigt die Lichtverhältnisse in der Ebene der Aperturblende (=Eintrittspupille des Objektives), wobei die variable Kreisblende BL geringfügig geschlossen ist. In einem Takt wird durch das Beleuchtungsbündel die Fläche F1 und im folgenden Takt die Fläche F2 der Eintrittspupille beleuchtet. Die Schwerpunkte der jeweiligen Bündel sind innerhalb der Beleuchtungsapertur so einstellbar, daß das Objekt mit dem für Stereobetrachtung erforderlichen Winkel beleuchtet wird
Fig. 7b zeigt die Lichtverhältnisse in der Ebene der Aperturblende (=Eintrittspupille des Objektives), wobei zusätzlich eine variable Zentralblende ZB als undurchsichtige Kreisbiende angeordnet ist. Durch Variation des Außendurchmessers der Kreisblende ZB kann die Tiefenschärfe und die Auflösung des stereoskopischen Bildes dem Objekt angepaßt werden, so daß ein stereoskopisches Bild höchster Auflösung zu beobachten ist, da die nullte Beugungsordnung teilweise unterdrückt und damit das Auflösungsvermögen erhöht wird.
Fig. 7c zeigt die Lichtverhältnisse in der Ebene der Aperturblende (=Eintrittspupille des Objektives), wobei zusätzlich eine variable Zentralblende als undurchsichtige Rechteckblende angeordnet ist, Durch Variation der Breite b der Rechteckblende kann die Tiefenschärfe und die Auflösung des stereoskopischen Bildes dem Objekt angepaßt werden, so daß ein stereoskopisches Bild höchster Auflösung zu beobachten ist.
Der Austausch verschiedener Blenden kann beispielsweise mittels eines Revolvers mit Zentralblenden verschiedener Abmessungen erfolgen.

Eine Realisierung im Lichtmodulator selbst mittels der Flüssigkristallmatrix, die gemäß EP 730181 den Lichtmodulator bildet, ist ebenfalls vorteilhaft möglich, indem ein Teil der Flüssigkristallmatrix bei beiden Schaltstellungen zur Freigabe des Beleuchtungsstrahlenganges undurchlässig geschaltet ist, beispielsweise ein rechteckiger oder kreisförmiger Mittelteil wie in Fig. 7b und 7c, dessen Größe ansteuerbar variierbar ist.

Die erfindungsgemäß eingesetzte Blende BL muß nicht exakt in der Ebene der Eintrittspupille des Objektives OB angeordnet sein, es sind auch Abweichungen bis zu einer Größenordnung von etwa 10 % der Kondensorbrennweite des Kondensors in Fig.3 von der Lage der Ebene denkbar, wobei die Blende vorteilhaft etwa innerhalb 5% der Kondensorbrennweite von der Lage des Lichtmodulators LM entfernt ist.

### Aufstellung der verwendeten Bezugszeichen:

- A: Ansteuereinheit
- DMD: Digital Mirror Spiegel
- O: Objekt
- OB: Objektiv
- T1,:
- T21,:
- T22: Tubuslinsen
- FL: Feldlinse
- OK1,:
- OK2: Okulare
- UP1,:
- UP2: Umlenkprismen
- P1,:
- P2: Prismen
- L: Leuchte
- K: Kollektor
- KO: Kondensor
- EP: Eintrittspupille
- AP: Austrittspupille
- S1,:
- S2,:
- S3: Spiegel
- LM: Lichtmodulator
- TB1,:
- TB2: Tubuslinsen
- VK: Videokamera
- ST: Strahlteiler
- BT: Binokulartubus
- PB: Polarisationsbrille
- M: Monitor
- MS: Monitorshutter
- PST: Polstrahlenteiler
- P1,:
- P2: Polarisatoren
- BL: Blende
- ZB: Zentralblende
- F1,:
- F2: Flächen
- ST1: Strahlteiler
- SB: Shutterbrille
- AO: Abbildungsoptik

## Patentansprüche

1. Verfahren zur Erzeugung eines stereoskopischen Bildes , dadurch gekennzeichnet, daß im vom Objekt kommenden Abbildungsstrahlengang , in oder in der Nähe der Austrittspupille einer Abbildungsoptik oder zu dieser optisch konjugiert, eine Pupillenteilung zur taktweisen Zuordnung zu einem rechten und einem linken Betrachterauge erfolgt.

2. Anordnung zur Erzeugung eines stereoskopischen Bildes ,
wobei in oder in der Nähe der Austrittspupille einer ein Objekt abbildenden Abbildungsoptik oder zu dieser optisch konjugiert Mittel zur Pupillenteilung und taktweisen Zuordnung zu einem rechten und einem linken Betrachterauge vorgesehen sind.

3. Anordnung nach Anspruch 2, wobei die Zuordnung zu den Betrachteraugen über ein rechtes und ein linkes Okular erfolgt.

4. Anordnung nach Anspruch 2 , wobei zur Pupillenteilung und taktweisen Zuordnung mindestens eine Videokamera sowie nachgeordnete 3D-Wiedergabetechnik vorgesehen ist.

5. Anordnung nach Anspruch 2 oder 3, wobei zur Pupillenteilung und taktweisen Zuordnung mindestens eine schwenkbare Spiegelanordnung vorgesehen ist.

6. Anordnung nach Anspruch 2 oder 3, wobei zur Pupillenteilung ein variabler Lichtmodulator vorgesehen ist.

7. Anordnung nach einem der Ansprüche 1 - 6 , wobei zur taktweisen Zuordnung mindestens eine Videokamera mit geeigneter 3D-Wiedergabetechnik vorgesehen ist.

8. Anordnung nach Anspruch 2 oder 3, wobei zur taktweisen Zuordnung getaktete Lichtmodulatoren im Okularstrahlengang vorgesehen sind.

9. Anordnung nach Anspruch 2 oder 3, wobei zur taktweisen Zuordnung vor den Okularen ein Polstrahlenteiler vorgesehen ist, dem Mittel zur taktweisen Änderung des Polarisationszustandes des auf den Polstrahlenteiler gelangenden Lichtes vorgeordnet sind.

10. Anordnung nach einem der Ansprüche 1 - 9, wobei die Abbildungsoptik ein Objektiv ist

11. Anordnung nach einem der Ansprüche 1 - 10, in einem mikroskopischen Strahlengang mit einem einkanaligen Mikroskopobjektiv.

12. Anordnung nach einem der Ansprüche 1 - 11, wobei in oder in der Nähe der Ebene der Austrittspupille des Objektives oder zu dieser optisch konjugiert eine Blende vorgesehen ist .

13. Anordnung zur stereoskopischen Betrachtung, mit in oder in der Nähe der Ebene der Eintrittspupille eines Objektives angeordneten Mitteln zur wechselweisen Erzeugung mindestens zweier Beleuchtungsstrahlbündel, die ein Objekt unter verschiedenen Winkeln über eine Beleuchtungsoptik beleuchten , wobei innerhalb der Mittel oder in ihrer Nähe mindestens eine Blende angeordnet ist.

14. Anordnung nach Anspruch 12 oder 13, wobei die Blende bezüglich ihrer Abmessungen verstellbar ist.

15. Anordnung nach Anspruch 12, 13 oder 14, wobei die Blende auswechselbar ist.

16. Anordnung nach einem der Ansprüche 12 - 15, wobei die Blende als Kreisblende, Rechteckblende oder Irisblende ausgebildet ist.

17. Anordnung zur stereoskopischen Betrachtung nach einem der Ansprüche 13 - 16 , mit in oder in der Nähe der Ebene der Eintrittspupille eines Objektives angeordneten Mitteln zur wechselweisen Erzeugung mindestens zweier Beleuchtungsstrahlbündel, die ein Objekt unter verschiedenen Winkeln über eine Beleuchtungsoptik beleuchten , wobei diese Mittel gleichzeitig eine , vorzugsweise bezüglich Blendengröße und / oder Blendenform veränderbare, Blendenfunktion aufweisen.
